# EUROPEAN PATENT APPLICATION

(11) **EP 4 542 079 A1**
(43) Date of publication of application: **23.04.2025**
(21) Application number: 23204001.4
(22) Date of filing: 17.10.2023
(51) Int. Cl.: F16F 1/44, F16F 1/40, B61F 5/08, B61F 5/12

(54) **COMPRESSION SPRING, PREFERABLY AS AN EMERGENCY SPRING FOR A BOGIE OF A RAILWAY VEHICLE**

(71) Applicant: Jörn GmbH, 71336 Waiblingen (DE); ALSTOM Transport Deutschland GmbH, 38239 Salzgitter (DE)
(72) Inventor: Böttcher, Andreas, 38173 Sickte (DE); Seyser, Manuel, 81669 München (DE); Lippke, Oliver, 71686 Remseck (DE)
(74) Representative: Liebl, Thomas

(57) **Abstract**

The invention relates to a compression spring (2), preferably as an emergency spring for a bogie of a railway vehicle, with a spring upper part (5), a spring lower part (3) and with an elastomeric spring element (7) vulcanised in between, with a centrally inserted stop bolt (16). According to the invention, the stop bolt (16) is designed in two parts with a one-piece longitudinal bolt part (17) with lower bolt head part (18) and with a separate upper bolt head part (19), which telescopically engages over an upper region of the longitudinal bolt part (17) and is, preferably vertically, displaceable there, wherein in the assembled state of the compression spring (2) the stop bolt (16), with respect to the vertical-axis direction, is inserted from below with its longitudinal bolt part (17) on the compression spring lower part (3), the upper bolt head part (19) is inserted on the compression spring upper part (5) and the compression spring upper part (5) is displaced on the longitudinal bolt part (17) towards the elastomeric spring element (7), preferably in order to build up a spring element pretension, and in this position a retaining pin (23), preferably a cylindrical pin as retaining pin, is inserted as a holding pin in aligned transverse holes (21) in the upper bolt head part (19) and in an upper region of the longitudinal bolt part (17).

## Description

The invention relates to a compression spring, preferably as an emergency spring for a bogie of a railway vehicle, according to the preamble of claim 1.

A known compression spring (DE 196 08 860 C2) consists of a dimensionally stable compression spring upper part, a dimensionally stable compression spring lower part and an elastomeric spring element vulcanised in between. A stop bolt as a clamping and stop element is inserted through central passage openings of the compression spring lower part, the elastomeric spring element and the compression spring upper part and, in the case of a pretensioned elastomeric spring element, is supported by an upper bolt head part from above on the compression spring upper part and by a lower bolt head part from below on the compression spring lower part.

The compression spring upper part and the compression spring lower part are both mounting plates that are firmly connected to two components to be mounted. When the elastomeric compression spring is released, the stop bolt has the function of a tension stop corresponding to its bolt length, and when the compression spring is compressed, it has the function of a compression stop that is supported on the bearing caps of the mounting plates. The stop bolt is made in two parts, whereby an upper bolt head part is firmly screwed to a longitudinal bolt part, so that in the functional position the stop bolt acts as a one-piece component. The elastomeric spring element is made of several elastomeric layers with intermediate sheets vulcanised in between, whereby all elastomeric layers are loaded and deformed together during compression and extension.

The object of the invention is to further develop a compression spring, in particular as an emergency spring for a bogie of a railway vehicle, in which the characteristic curve is adapted in an optimised manner to real load conditions occurring during operation.

This object is solved with the features of the independent claims. Advantageous embodiments are subject of the subclaims.

According to claim 1, a compression spring, preferably as an emergency spring for a bogie of a railway vehicle, comprises a dimensionally stable compression spring upper part, a dimensionally stable compression spring lower part and an elastomeric spring element vulcanised in between. The compression spring further comprises a stop bolt as a clamping and stop element, which projects through passage openings of the compression spring lower part, of the elastomeric spring element and of the compression spring upper part. The stop bolt, preferably with the elastomeric spring element pretensioned, is supported with an upper bolt head part, relative to the vertical axis direction, from above on the compression spring upper part and with a lower bolt head part, relative thereto, from below on the compression spring lower part, in each case at edge regions of the associated passage opening, preferably under pretension. According to the invention, the stop bolt is made in two parts with a one-piece longitudinal bolt part with lower bolt head part and with a separate upper bolt head part, which telescopically engages over an upper area of the longitudinal bolt part and is, preferably vertically, displaceable there. In the assembled state of the compression spring, the stop bolt, with respect to the vertical-axis direction, is inserted from below with its longitudinal bolt part on the compression spring lower part and the upper bolt head part is inserted on the compression spring upper part, with the compression spring upper part being displaced, preferably by means of an assembly device during assembly, on the longitudinal bolt part towards the elastomeric spring element, preferably until a spring element pretension is built up. In this position, a retaining pin, for example a cylindrical pin as a retaining pin, is inserted as a holding pin in aligned transverse holes in the upper bolt head part and in an upper area of the longitudinal bolt part. The retaining pin supports the pretension and the assembly device can be removed. The pretension to be set or specified can in principle also be zero Newton (= 0 N), although a pretension greater than zero Newton is the preferred case.

With such a construction, it is possible to easily adapt the characteristic curve of the compression spring in an optimised manner to the real load conditions that occur during operation, which is made even clearer by the following optional and preferred designs:
Thus, according to a preferred embodiment, the compression spring lower part is a base plate as a mounting plate being suitable and designed for fastening to a first component supporting the compression spring, in particular to a vehicle body. In the area of its passage opening for the longitudinal bolt part, the mounting plate has a receiving recess for receiving the lower bolt head part in such a way that when the lower bolt head part is inserted without vertical compression spring loading, a lower free spring path is formed between the lower bolt head part and the component surface of the first component lying under the mounting plate in the mounting position.

The compression spring upper part is a, preferably dimensionally stable, cover plate in which the upper bolt head part, preferably under operational vertical load, is accommodated and supported, preferably accommodated and supported flush with the upper side. In a particularly preferred specific embodiment, it is preferable that a second component to be supported with respect to the first component, in particular a chassis component of a vehicle, can be placed and supported on the compression spring on the pressure plate, whereby a vertical load can be applied to the compression spring, if necessary with a transverse load component.

The transversal hole in the longitudinal bolt part is designed for a fixed position of the retaining pin with a diameter adapted to it, in particular cylindrical for a cylindrical pin as retaining pin. In contrast, two opposite transversal holes on the upper bolt head part are designed as vertical slotted hole guides in which the retaining pin and thus the longitudinal bolt part are held in the bolt head part so that they can be moved vertically.

According to another preferred embodiment, it is preferable that the elastomeric spring element is made of several elastomeric layers with intermediate sheets vulcanised in between, whereby the elastomeric layers and the intermediate sheets have passage openings for the inserted stop bolt. The arrangement here has the following configuration for a soft spring characteristic at the beginning of the deformation/deflection: the upper bolt head part is guided through a first upper elastomeric layer under the cover plate with a bolt head part diameter that is larger than the longitudinal bolt part diameter by a radial ring projection. In the vertically unloaded but preloaded state of the thrust bearing, the retaining pin is in contact with the lower slotted hole position. The ring projection, however, has a vertical distance as an upper spring path to an underlying first intermediate sheet, whereby this intermediate sheet has a smaller diameter corresponding to the longitudinal bolt part diameter. This allows the upper bolt head part to be supported by its ring projection on this first intermediate sheet after passing through the upper spring path.

This results in the following bearing function:
In operation, when the vertical load on the cover plate increases above the pretension (which can in principle also be zero Newton, but is preferably greater than zero Newton), the cover plate together with the upper bolt head part is first moved vertically downwards with a low spring characteristic corresponding to the first upper elastomer layer with the retaining pin in the slotted hole guide until the ring projection is in contact with the first intermediate sheet. This initial vertical movement is thus largely decoupled from the spring characteristic of the elastomeric layers further below.

As the vertical load on the cover plate continues to increase, it is displaced further downwards, whereby the elastomeric layers underneath are also loaded and deformed by the first intermediate sheet as the spring characteristic progressively increases. In the process, the lower bolt head part in the receiving recess becomes movable downwards in the lower free spring path.

As the vertical load on the cover plate increases even further, the longitudinal bolt part is in contact with the tubular cavity on the bolt head part, the retaining pin is just before the upper slotted hole position and the stop bolt is moved downwards as the spring characteristic continues to increase until it comes to a hard stop on the component surface of the first component below.

Overall, this results in a soft vertical profile of the characteristic curve at the beginning of the load, followed by a progressive increase of the profile of the characteristic curve up to a hard stop.

It goes without saying that the spring element preload (which can in principle also be zero Newton, but is preferably greater than zero Newton) must be selected appropriately, for example based on real expected or occurring operating and/or loading conditions. The concretely specified spring element pretension should also take into account the flow and settling processes that occur in practice.

A compact construction of the compression spring can be achieved in particular by the fact that the compression spring, which preferably has a rectangular or round or oval ground outline, has an upwardly continuing and/or conical course, preferably with a centrally inserted stop bolt.

The preferred principle outlined above, according to which the upper bolt head part is only supported on an intermediate sheet after a certain free spring path has been passed through and only then are the elastomeric layers underneath applied, it can also be used for load decoupling of several elastomeric layers. For example, the first upper elastomeric layer described above can be relatively thick and contain two or more intermediate sheets through which the upper bolt head part is inserted with its ring projection to form an upper free spring path and the ring projection can only be placed on an intermediate sheet with a smaller diameter below it.

According to another specifically preferred embodiment, the stop bolt should be loosely inserted in the elastomeric spring element, especially in the elastomeric layers and intermediate sheets, so that the stop bolt can be tilted back under transverse loads with corresponding deformation of the elastomeric spring element.

A compression spring with the functions resulting from the claimed features can advantageously be used as an emergency spring for a bogie of a railway vehicle if a main spring of the type of a pneumatic spring usually used there loses its function or fails.

A method for applying a load to a compression spring according to the invention is also claimed.

The invention is explained by way of example and in more detail with reference to the following drawings, which show the following:
- Figures 1 to 3: Views of a rubber-metal manufacturing part of a compression spring,
- Figures 4 and 5: Cutaway views of the assembly of the compression spring,
- Figures 6 and 7: Displays of a compression spring installed with a pretension greater than zero Newton,
- Figures 8 and 9: Sectional views with a first load level,
- Figures 10 and 11: Sectional views with a second load level,
- Figures 12 and 13: Sectional views with a third load level,
- Figure 14: a sectional view of a compression spring with transverse load, and
- Figure 15: a sectional view corresponding to Figure 14 with maximum vertical load and transverse load.

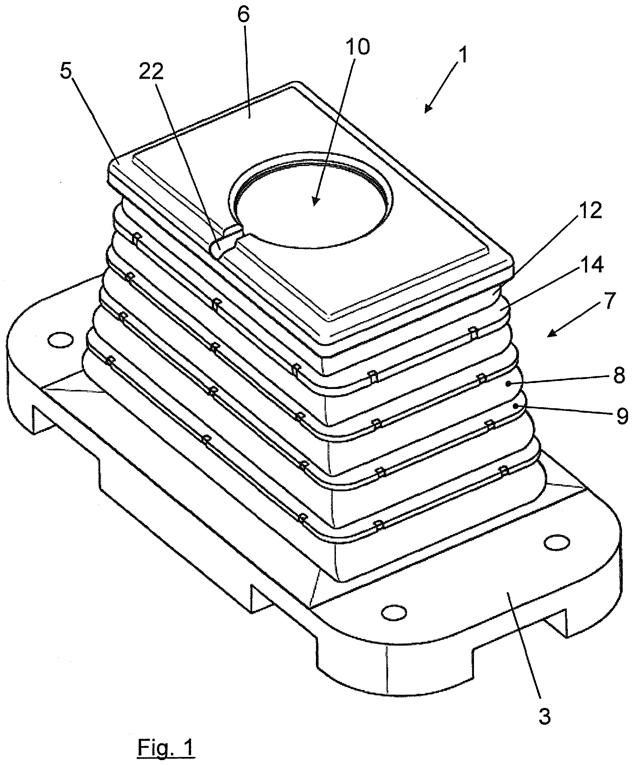

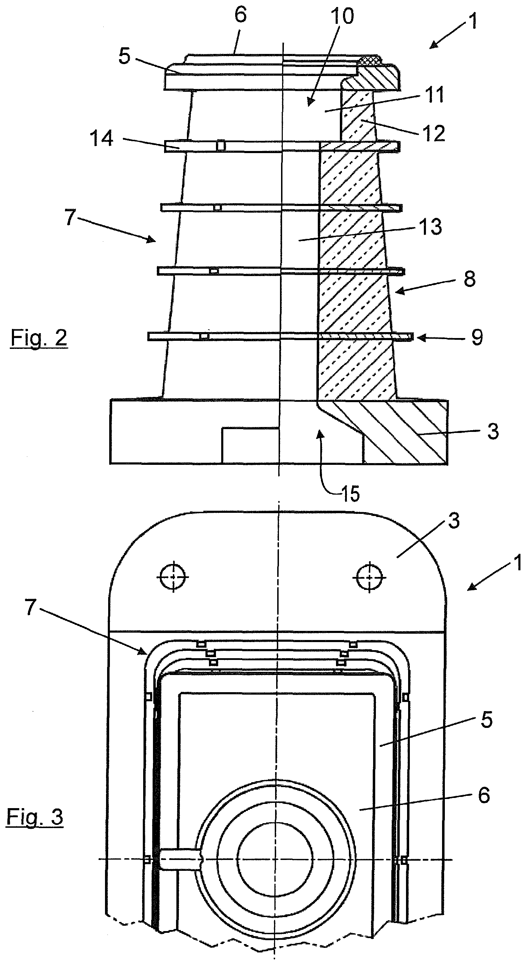

Figure 1 shows a rubber-metal manufacturing part 1 of a compression spring 2 in perspective, Figure 2 in vertical axis direction and in a partial vertical longitudinal section and Figure 3 in a partial plan view. The rubber-metal manufacturing part 1 consists of a compression spring lower part as a base plate and mounting plate 3, which can be connected to a first component, in this case for example a vehicle body 4 of a railway vehicle. Furthermore, the rubber-metal manufacturing part 1 consists of a cover plate 5 with a top side 6, preferably with a sliding layer as top side 6, on the upper side and a central passage opening 10. An elastomeric spring element 7 is vulcanised in between the mounting plate 3 and the cover plate 5, which consists of five elastomeric layers 8 with intermediate sheets 9 in between.

The rubber-metal manufacturing part 1 with the elastomeric spring element 7 has, only by way of example, a rectangular outline and tapers slightly towards the top.

As can be best seen from the right vertical section of Figure 2, the passage opening 10 has a stepped diameter with a larger diameter 11 in the area of the cover plate 5 and the uppermost elastomeric layer 12 and with a smaller diameter 13 through the intermediate sheets 9, in particular also through the uppermost intermediate sheet 14 and the further elastomeric layers 8 as well as through the mounting plate 3, whereby a receiving recess 15 is formed here from below.

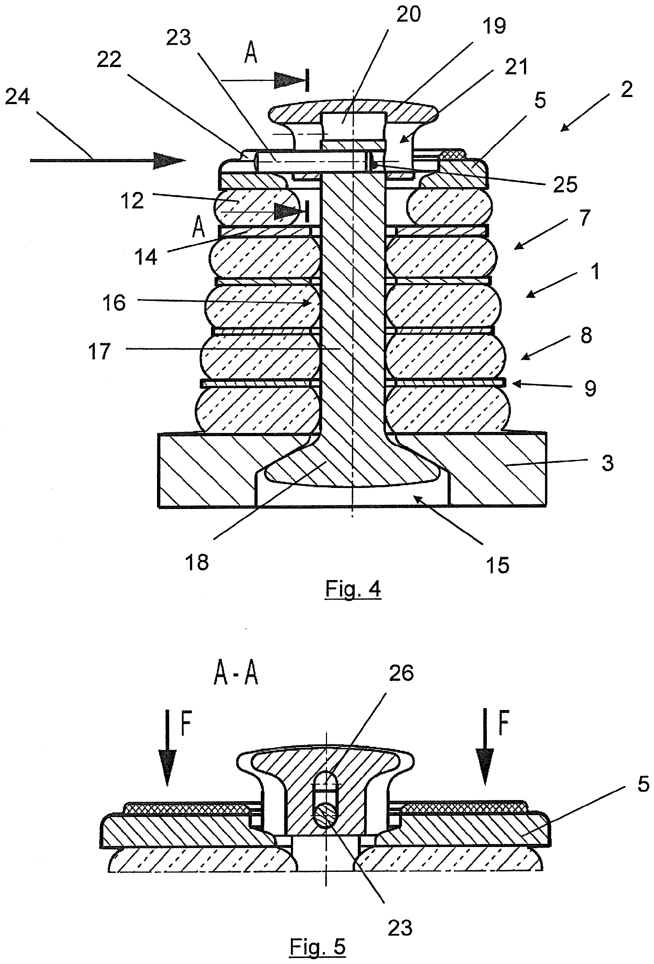

Figures 4 and 5 show sectional views of the assembly of a stop bolt 16 in the rubber-metal manufacturing part 1 to produce a complete compression spring 2.

The stop bolt 16 is made in two parts with a one-piece longitudinal bolt part 17 with a lower mushroom-shaped bolt head part 18 and with a separate mushroom-shaped upper bolt head part 19, which telescopically overlaps the longitudinal bolt part 17 with a tubular cavity 20 and is vertically displaceable there on the longitudinal bolt part 17.

In the pre-assembled state of the compression spring 2, the stop bolt 16 with its longitudinal bolt part 17 is inserted from below through the mounting plate 3 in the passage opening 10, whereby the lower bolt head part 18 lies in the receiving recess 15 of the mounting plate 3.

To connect the upper bolt head part 19 with the longitudinal bolt part 17 and to apply a pretension of greater than zero Newton in the elastomeric spring element 7, a pressure force F is applied to the cover plate 5, but not to the upper bolt head part 19, by means of an assembly device (not shown) until transversal holes 21 in the upper bolt head part 19 and the upper area of the longitudinal bolt part 17 are aligned. In this position, a retaining pin 23 is inserted, through a groove 22 in the cover plate 5, into the transversal holes 21 (insertion direction 24).

The transversal hole 21 on the longitudinal bolt part 17 is designed as a cylindrical transversal hole 25 corresponding to the diameter of the cylindrical pin as retaining pin 23 for its fixed connection to the longitudinal bolt part 17. In contrast, the transversal hole 21 on the upper bolt head part 19 is designed as a vertical slotted hole guide 26 in which the retaining pin 23 and thus the longitudinal bolt part 17 is held in a vertically displaceable manner in the upper bolt head part 19.

When the assembly device (not shown) is released, the stop bolt 16 maintains the applied pretension in the compression spring 2.

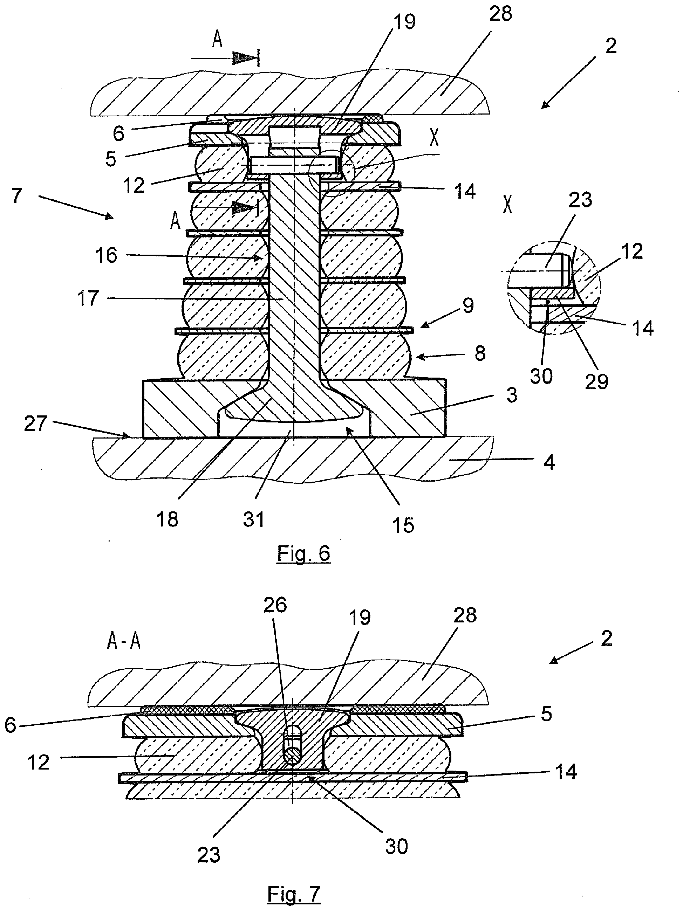

In the sectional views of Figures 6 and 7, the compression spring 2 is shown in its installation position on a vehicle (not shown), whereby the lower mounting plate 3 is attached to a vehicle body part 4, which forms a continuous component surface as a stop surface 27 under the receiving recess 15 and thus under the lower bolt head part 18.

In addition, a second component to be supported with respect to the vehicle body 4, here exemplarily as chassis component 28, lies flat on the cover plate 5 or the top side 6 and the upper bolt head part 19 with a certain predetermined load. The pretension introduced into the compression spring 2 is by way of example chosen in such was, that in Figures 6 and 7 the compression spring 2 has or is not yet compressed and the elastomeric layers 8 are not loaded and deformed in addition to the pretension. The compression spring 2 is designed in such a way that the upper bolt head part 19 dips into the upper area of the passage opening 10 with the larger diameter 11, but with a radial ring projection 29 with which it overlaps the upper area of the longitudinal bolt part 19, does not yet rest on the upper intermediate sheet 14 with the smaller diameter 13 below it, so that a free upper spring path 30 remains between the ring projection 29 and the upper intermediate sheet 14, as can be seen in detail in the enlarged partial representation X of Figure 6. In this position, the lower bolt head part 18 is also fully retracted into the receiving recess 15, so that a larger free lower spring path 31 is formed between the lower bolt head part 18 and the underlying stop surface 27 compared to the upper spring path 30.

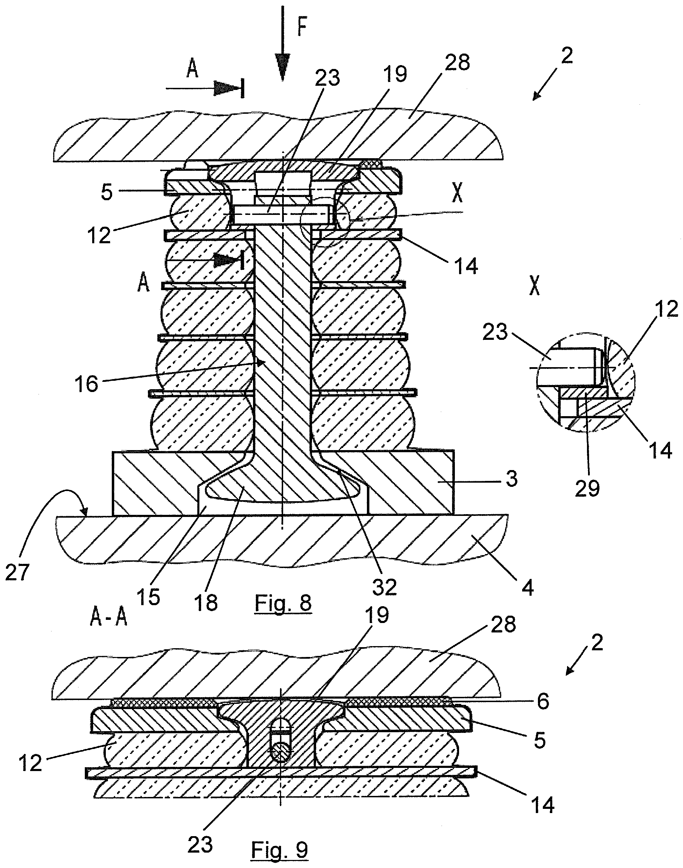

In figures 8 to 13 the compression spring 2 is shown in three load stages starting from the basic position according to figures 6 and 7 with increasing vertical load (vertical force F):
In the sectional views of Figures 8 and 9, the compression spring 2 is shown in a first load stage with a relatively low vertical pressure load, whereby with a soft vertical profile of the characteristic curve the upper free spring path 30 has passed through and is closed and the ring projection 29 is already resting on the uppermost intermediate sheet 14, as can be clearly seen in the detailed view X of Figure 8. In addition, the lower bolt head part 18 has been lifted a small distance 32 from its contact in the receiving recess 15.

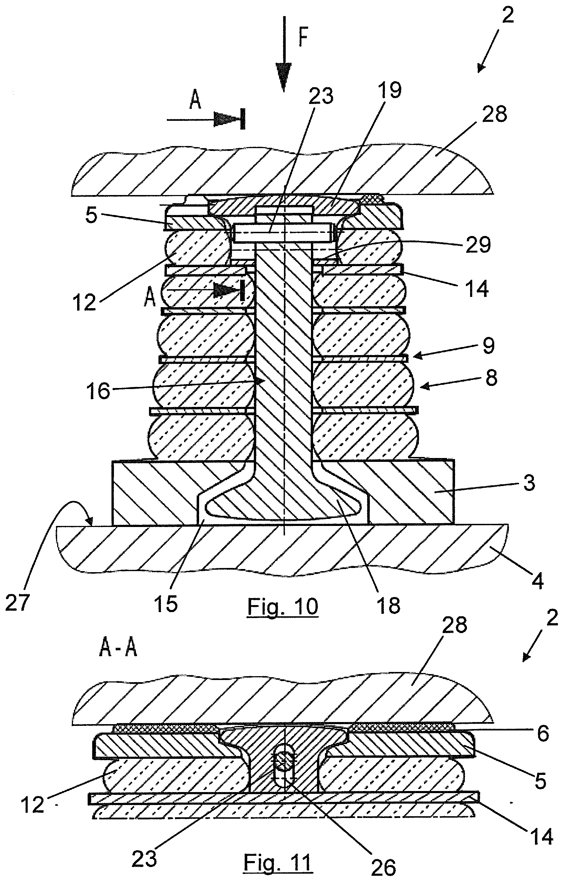

In figures 10 and 11, the compression spring 2 is shown in a second load stage with further increasing vertical loading, whereby the upper bolt head part 19 presses with its ring projection 29 on the uppermost intermediate sheet 14 and the elastomeric layers 8 underneath are thus loaded and deformed with a progressive increase in the profile of the characteristic curve. In this second load stage, the stop bolt 16 does not yet have a stop function, as it can deflect upwards with its retaining pin 23 in the slotted hole guide 26.

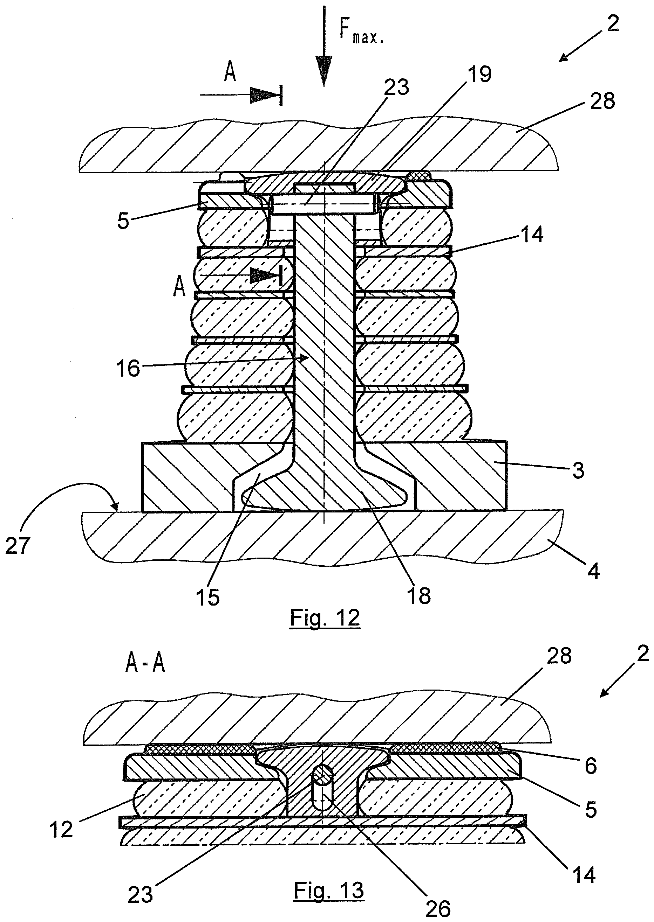

In figures 12 and 13, the compression spring 2 is shown in a third load stage with very high vertical loading (force Fₘₐₓ ). The retaining pin 23 in the slotted hole guide 26 has been moved upwards to the stop, whereby the stop bolt 16 together with the upper bolt head part 19 has been moved downwards until the lower bolt head part 18 rests on the stop surface 27 of the vehicle body 4 with a hard stop after a maximum possible spring path 31.

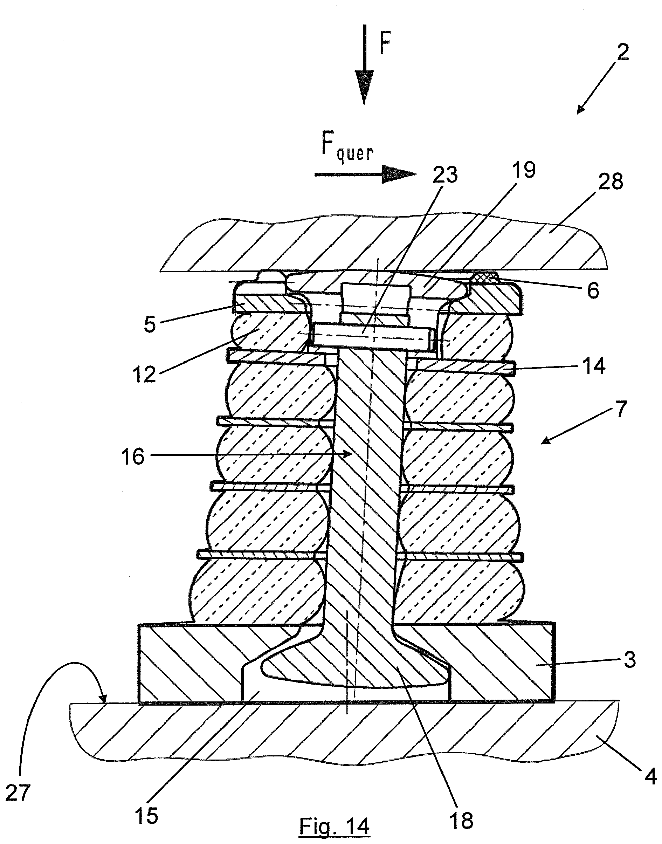

Figure 14 shows the compression spring 2 with a vertical load as shown in figures 8 and 9 and an additional light transverse load (F_{quer} ). With this load, the loosely mounted stop bolt 16 can be tilted back together with the elastomeric spring element 7.

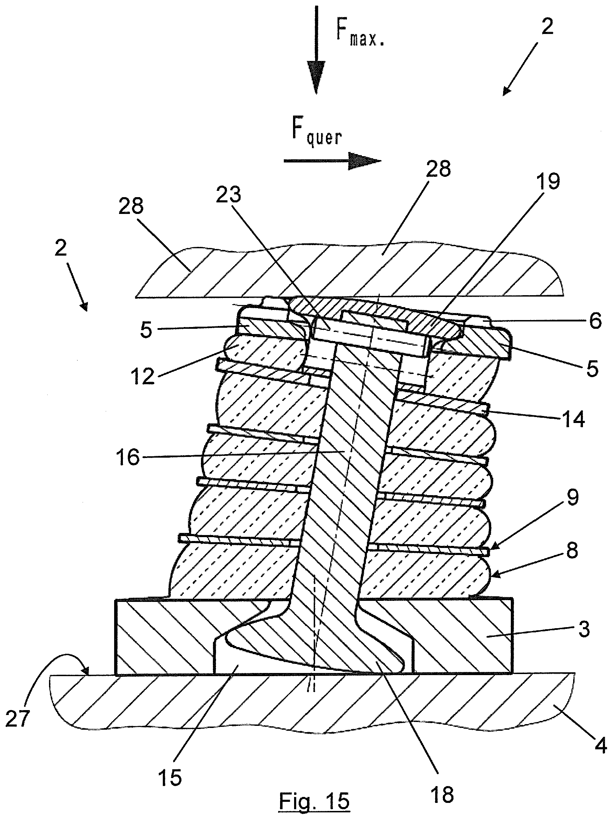

Figure 15 shows a condition of the compression spring 2 with a high vertical load as shown in figures 12 and 13 with a hard stop of the stop bolt 16 at the stop surface 27 and an additional high transverse load (F_{quer} ). Here the stop bolt 16 is strongly inclined until its inclination is limited and blocked by the shape of the receiving recess 15 and the lower bolt head part 18. To prevent a transverse overload, the upper, flat chassis component 28 can move on the top side 6 respectively on the sliding layer as top side 6 of the cover plate 5.

**List of reference signs**

| | | | |
|---|---|---|---|
| 1 | Rubber-metal manufacturing part | 27 | Stop surface |
| 2 | Compression spring | 28 | Chassis component |
| 3 | Mounting plate | 29 | Ring projection |
| 4 | Vehicle body | 30 | Free upper spring path |
| 5 | Cover plate | 31 | Free lower spring path |
| 6 | Top side | 32 | Distance |
| 7 | Elastomeric spring element | | |
| 8 | Elastomeric layers | | |
| 9 | Intermediate sheets | | |
| 10 | Passage opening | | |
| 11 | Large diameter | | |
| 12 | Top elastomeric layer | | |
| 13 | Smaller diameter | | |
| 14 | Top intermediate sheet | | |
| 15 | Receiving recess | | |
| 16 | Stop bolt | | |
| 17 | Longitudinal bolt part | | |
| 18 | Lower bolt head part | | |
| 19 | Upper bolt head part | | |
| 20 | Tubular cavity | | |
| 21 | Transversal holes | | |
| 22 | Groove | | |
| 23 | Retaining pin | | |
| 24 | Insertion direction | | |
| 25 | Cylindrical transversal hole | | |
| 26 | Slotted hole guide | | |

## Claims

1. Compression spring (2), preferably as an emergency spring for a bogie of a railway vehicle, with a dimensionally stable compression spring upper part (5), a dimensionally stable compression spring lower part (3) and with an elastomeric spring element (7) vulcanised in between,
with a stop bolt (16) as a clamping and stop element, which projects through passage openings (10) of the compression spring lower part (3), of the elastomeric spring element (7) and of the compression spring upper part (5) and the stop bolt (16), preferably with the elastomeric spring element (7) pretensioned, is supported with an upper bolt head part (19), relative to the vertical axis direction, from above on the compression spring upper part (5) and with a lower bolt head part (18), relative thereto, from below on the compression spring lower part (3), in each case at edge regions of the associated passage opening (10), preferably under pretension,
**characterized in,**
**that** the stop bolt (16) is designed in two parts with a one-piece longitudinal bolt part (17) with lower bolt head part (18) and with a separate upper bolt head part (19), which telescopically engages over an upper region of the longitudinal bolt part (17) and is, preferably vertically, displaceable there, wherein in the assembled state of the compression spring (2) the stop bolt (16), with respect to the vertical-axis direction, is inserted from below with its longitudinal bolt part (17) on the compression spring lower part (3), the upper bolt head part (19) is inserted on the compression spring upper part (5) and the compression spring upper part (5) is displaced on the longitudinal bolt part (17) towards the elastomeric spring element (7), preferably in order to build up a spring element pretension, and in this position a retaining pin (23), preferably a cylindrical pin as retaining pin, is inserted as a holding pin in aligned transverse holes (21) in the upper bolt head part (19) and in an upper region of the longitudinal bolt part (17).

2. Compression spring according to claim 1, **characterised in that** the compression spring lower part is a base plate as a mounting plate (3) which is suitable and designed for fastening to a first component, in particular to a vehicle body (4), supporting the compression spring (2), with the mounting plate (3) having a receiving recess (15) in the region of the passage opening (10) for receiving the lower bolt head part (18), in such a way that, when the lower bolt head part (18) is inserted without vertical compression spring loading, a predetermined lower free spring path (31) is formed between the lower bolt head part (18) and the component surface (27) of the first component (4), which component surface (27) lies below the mounting plate (3) in the mounting position,

3. Compression spring according to claim 1 or 2, **characterised in that** the compression spring upper part is a cover plate (5) in which the upper bolt head part (19) is accommodated and supported, preferably flush with the upper side, preferably during operational vertical loading.

4. Compression spring according to claim 2 and 3, **characterised in that** a second component to be mounted with respect to the first component (4), in particular a chassis component (28) of a vehicle, is placable and supportable on the pressure plate (5) and the upper bolt head part (19).

5. Compression spring according to any one of the preceding claims, **characterised in that** the transverse hole (21) in the longitudinal bolt part (17) is a bore, in particular a cylindrical bore, which is adapted for a fixed position of the retaining pin (23) therein, and the transverse holes (21) on the upper bolt head part (19) are designed as vertically slotted hole guides (26) in which the retaining pin (23) and thus the longitudinal bolt part (17) are held in a vertically displaceable manner in the upper bolt head part (19).

6. Compression spring according to any one of the preceding claims, **characterised in**
**that** the elastomeric spring element (7) is formed in multiple layers from a plurality of elastomeric layers (8) with intermediate sheets (9) vulcanised in between, the elastomeric layers (8) and intermediate sheets (9) having passage openings (10) for the inserted stop bolt (16), and are arranged in such a way that a first, with reference to the vertical axis direction, upper elastomeric layer (12) is arranged under the cover plate (5), through which layer the upper bolt head part (19) is guided with its diameter (11) larger by a radial ring projection (29) than the longitudinal bolt part diameter,
with the compression spring (2) being suitable and designed such that the retaining ring (23), in the vertically unloaded but preloaded state of the compression spring (2), rests against the lower slotted hole position and the ring projection (29) lies at a vertical distance as an upper spring path (30) from a first intermediate sheet (14), which surrounds the longitudinal bolt part (17) with a smaller diameter (13) of the passage opening (10) corresponding to the longitudinal bolt part (17), below the upper elastomeric layer (12), preferably in such a way that the first intermediate sheet (14) is in contact with the longitudinal bolt part (17), with the compression spring (2) being further suitable and designed such that, in operation, in the event of increasing vertical load, preferably above the pretension on the cover plate (5), the cover plate (5), together with the upper bolt head part (19), is first moved vertically downwards with a spring characteristic resulting from all the elastomeric layers with the retaining pin (23) in the slotted hole guide (26) until the ring projection (29) bears against the first intermediate sheet (14), this movement being essentially decoupled from the elastomeric layers lying further below with regard to the spring characteristic,
**that**, as the vertical load on the cover plate (5) continues to increase, the cover plate (5) is displaced further downwards with the upper bolt head part (19), whereby, as the spring characteristic progressively increases, only the elastomeric layers (8) lying underneath are loaded and deformed by the uppermost intermediate sheet (14) and the lower bolt head part (18) is moved downwards in the receiving recess (15) in the lower free spring path (31), and
**that** with a still further increasing vertical load on the cover plate (5), the longitudinal bolt part rests in the tubular cavity on the bolt head part and the stop bolt (16) is moved downwards overall with a still further increasing spring characteristic until it comes to a stop on the component surface (27) of the lower first component (4), so that overall a soft vertical profile of the characteristic curve results at the start of the load, followed by a progressive increase in the profile of the characteristic curve until it comes to a hard stop.

7. Compression spring according to any one of the preceding claims, **characterised in that** the compression spring (2), preferably a compression spring (2) having a rectangular or round or oval outline, has an upwardly continuing and/or conical course, preferably with a centrally inserted stop bolt (16).

8. Compression spring according to any one of preceding claims, **characterised in that** a first upper, preferably relatively thick, elastomeric layer (12) is made up of two or more intermediate elastomeric layers, each subdivided by intermediate sheets (9), and these intermediate elastomeric layers surround the ring projection (29) of the upper bolt head part (19) with the associated intermediate sheets, so that, in the event of an increasing vertical load, several elastomeric layers, preferably the intermediate elastomeric layers, are decoupable from elastomeric layers further below with regard to the spring characteristic.

9. Compression spring according to any one of the preceding claims, **characterised in that** the stop bolt (16) is loosely inserted in the elastomeric spring element (7), in particular in the elastomeric layers (8) and intermediate sheets (9), so that the stop bolt (16) is inclinable in a restoring manner in the case of transverse loads with corresponding deformation of the elastomeric spring element (7).

10. Compression spring according to any one of the preceding claims, **characterised in that** a sliding layer (6) is applied to the compression spring upper part (5), especially to prevent transverse overload of the compression spring (2).

11. Bogie of a railway vehicle with a compression spring (2) according to any one of the preceding claims.

12. Method for applying a load to a compression spring, in particular to a compression spring as an emergency spring for a bogie of a railway vehicle, according to any one of claims 1 to 10, in which a soft vertical characteristic curve initially results at the start of loading, which is followed by a progressive increase in the characteristic curve up to a hard stop as the load increases.
